# EUROPEAN PATENT SPECIFICATION

(11) **EP 3 908 030 B1**
(45) Date of publication and mention of the grant of the patent: **19.03.2025**
(21) Application number: 20173021.5
(22) Date of filing: 05.05.2020
(51) Int. Cl.: H04W 24/04, G08G 5/00, H04B 7/024

(54) **RADIO SYSTEM FOR AIR TRAFFIC CONTROL AND METHOD OF CONTROLLING A RADIO SYSTEM FOR AIR TRAFFIC CONTROL**
FUNKSYSTEM ZUR LUFTVERKEHRSSTEUERUNG UND VERFAHREN ZUR STEUERUNG EINES FUNKSYSTEMS ZUR LUFTVERKEHRSSTEUERUNG
SYSTÈME RADIO POUR LE CONTRÔLE DU TRAFIC AÉRIEN ET PROCÉDÉ DE COMMANDE D'UN SYSTÈME DE CONTRÔLE DE TRAFIC AÉRIEN

(43) Date of publication of application: 10.11.2021
(73) Proprietor: Rohde & Schwarz GmbH & Co. KG, 81671 München (DE)
(72) Inventor: Kilpert, Joerg, 81671 München (DE); Gualtieri, Francesco, 81671 München (DE); Lautenbacher, Markus, 81671 München (DE)
(74) Representative: Novagraaf Group

(56) References cited:
- EP-A1- 3 641 381
- MARKUS LAUTENBACHER: "Innovative cloud architecture for air traffic control", NEWS 213/15, 13 August 2015 (2015-08-13), pages 55 - 59, XP055726477, Retrieved from the Internet <URL:https://scdn.rohde-schwarz.com/ur/pws/dl_downloads/dl_common_library/dl_news_from_rs/213/NEWS_213_VCS-4G_english.pdf> [retrieved on 20200901]
- DORIANA POPESCU: "IP Voice Communication Systems for Air Traffic Control", 17 February 2010 (2010-02-17), XP055736754, Retrieved from the Internet <URL:https://www.atc-network.com/atc-showcases/ip-voice-communication-systems-for-air-traffic-control> [retrieved on 20201005]

## Description

The invention relates to a radio system for air traffic control (ATC). Further, the invention relates to a method of controlling a radio system for air traffic control (ATC).

In the state of the art, radio systems used for air traffic control (ATC) are known that are used by at least one air service navigation provider (ANSP) for controlling a respective airspace. The radio systems used comprise a main radio as well as a standby radio for each frequency deployed, wherein the standby radio is activated in case of failure associated with the main radio. This means that a failure occurs which causes the use of the standby radio instead of the main radio for radio communication, particularly with an aircraft with in the airspace controlled by the respective ANSP.

So far, the radio systems use messages associated with several different protocols for switching from the main radio to the respective standby radio and for gathering the status of the radios in order to identify a respective failure associated with the main radio. Typically, a session initiation protocol (SIP) is used for initiating, maintaining and terminating real-time sessions, which is associated with a real-time transport protocol (RTP). Hence, the SIP with RTP can be used for manually switching between the respective radios. In addition, a simple network management protocol (SNMP) or a proprietary protocol like GB2PP is used for reading the respective status of the respective radio, which however requires additional hardware, for instance a gateway.

EP 3 641 381 A1 discloses a radio system for air traffic control according to the preamble of claim 1.

"Innovative cloud architecture for air traffic control" by Markus Lautenbacher, News 213/15, 13 August 2015, pages 55-59, discloses a radio system for air traffic control, wherein different control centers are interconnected via VolP technology.

Accordingly, at least two different protocols have to be handled by the radio system for controlling the respective radios of the radio system. However, this results in high efforts in order to align the messages associated with the different protocols in time. Furthermore, the costs are increased due to the additional hardware needed.

Accordingly, there is a need for a simplified radio system as well as a method of controlling such a radio system which enables radio redundancy and a high radio communication channel availability.

The invention provides a radio system for air traffic control (ATC) according to claim 1.

Further, the invention provides a method of controlling a radio system for air traffic control according to claim 13.

Accordingly, a radio system as well as a method of controlling the radio system are provided that ensure an automatic redundancy of the radio system which is based on remote radio control (RRC) functionality, also called radio remote control functionality. The radio switching, namely the switching between the main radio and the standby radio, as well as any status reporting of the respective radios is provided by means of messages associated with a single protocol, namely the respective RRC protocol, such that former problems associated with handling two different protocols are overcome appropriately.

The respective radios are established by IP-based radios such that these radios can receive and transmit messages directly by means of a single protocol. Further, these radios have a dedicated IP address such that they can be addressed appropriately. Voice signals can be exchanged via the radio system, for instance air-ground communication or ground-ground communication, which relate to Voice over Internet Protocol (VoIP) technology.

In general, a high radio communication channel availability of the radio system is achieved since the standby radio is activated in case of a failure associated with the main radio automatically.

In fact, the voice communication system is configured to make the decision in an automatic manner if the main radio or rather the standby radio is to be used for radio communication depending on the status of the respective radios, particularly any failure report received.

Put differently, the voice communication system directly and automatically commands a radio switching (from VCS to radios). Furthermore, the radios report back their respective status to the voice communication system (from radios to VCS).

Generally, the respective radio, namely the main radio and/or the standby radio, may be a receiving radio (receiver), a transmitting radio (transmitter), or a transmitting and receiving radio (transceiver). The transceiver may comprise a receiving module and a transmitting module in one housing.

The main radio and the standby radio are redundant which means that they are configured in a similar manner such that the standby radio can be used instead of the main radio in case of failure associated with the main radio.

The voice communication system is configured to control the main radio and the standby radio by means of a control symbol in a real-time transport protocol (RTP) header extension, and the respective radio is configured to report its status by means of a control symbol in the real-time transport protocol (RTP) header extension. The control symbol may correspond to a control bit. Hence, respective symbols or rather bits can be used to command from the voice communication system a main radio or rather a standby radio, particularly the respective switch-over. The respective symbols or rather bits are associated with the RTP header since they relate to a respective RTP header extension. In a similar manner, the radios report back their current status to the voice communication system by means of the RTP header, wherein the information is associated with the respective symbol or rather bit.

In a simple example, the status activate is associated with a "0", whereas the status inactive is associated with a "1" provided that the control symbol corresponds to a control bit.

The respective control symbol or rather control bit may be associated with "MSTxF1" or rather "MSRxF1", wherein MS represents "Main" and "Standby", Tx represents "transmitting radio", Rx represents "receiving radio", and F1 represents a frequency used or rather a respective frequency channel.

In case of a transceiver, both symbols or rather bits shall be used. All other bits and bytes or rather symbols defined in the RRC feature shall be ignored by the radio.

In case of a transmitter with transmitting module and receiving module in one housing, if only one module fails or receives a command to switch, then both modules shall be switched such that the transceiver as one device can either be main or standby only.

An aspect provides that the main radio itself is configured to forward the failure report to the voice communication system. Hence, the main radio itself detects the failure and forwards the failure report to the voice communication system. Put differently, the main radio can identify the respective failure that is associated with itself such that the main radio informs the voice communication system appropriately, thereby indirectly causing the voice communication system to initiate a switchover from the main radio to the standby radio. However, the main radio does not transmit a respective request to initiate the switchover since the main radio only forwards the respective information, namely the failure report, that is processed internally by the voice communication system, which results in commanding the switchover.

Another aspect provides that the radio system comprises a monitoring module that is configured to forward the failure report to the voice communication system. Particularly, the monitoring module is configured to detect a connection error of the main radio and/or a total failure of the main radio. Thus, the monitoring module may be formed separately with respect to the main radio such that a total failure of the main radio can still be detected by means of the monitoring module. The total failure may disable the main radio to communicate with the voice communication system, particularly reporting its status or rather any failure.

Furthermore, the monitoring module may detect any failure associated with the connection of the main radio to the voice communication system which in turn effects that the voice communication system cannot receive any information from the main radio.

Hence, the failure associated with the main radio may relate to a total failure of the main radio itself, a minor failure of the main radio that still allows the main radio to communicate with the voice communication system and/or a (network) connection error that might interrupt the communication between the main radio and the voice communication system.

The monitoring module may be part of the voice communication system that processes messages and/or reports exchanged between the voice communication system and the main radio in order to retrieve any information with regard to an occurring failure. For instance, absence of certain messages might be regarded as a network connection failure, indicating that the connection to the main radio is interrupted, or a major failure of the main radio which disables the main radio to communicate the respective message(s). Thus, the voice communication system is configured to take appropriate actions, for instance issuing an alarm or an alert as well as a switchover to the standby radio.

In case of a failure that is also associated with the standby radio, the voice communication system might issue an alert or an alarm in any case. Further, those failures also involving the standby radio do not trigger a switch-over from the main radio to the standby radio.

As mentioned above, the voice communication system is configured to monitor the status of both radios, namely the main radio as well as the standby radio. Accordingly, the voice communication system is always informed about the respective status of the radios such that the automatic switchover can be initiated automatically.

Furthermore, the voice communication system is connected with the main radio and/or the standby radio by means of an Internet Protocol (IP) infrastructure. The IP infrastructure may relate to a wide area network (WAN).

In fact, a wide area network (WAN) relates to computer networking technologies used to transmit data or information over long distances, and between different LANs, MANs and other localized computer networking architectures. Hence, WANs are used to connect LANs and other types of networks together so that users and computers in one location can communicate with users and computers in other locations. Many WANs are built for one particular organization and are private. Others, built by Internet service providers, provide connections from an organization's LAN to the Internet.

The main radio and/or the standby radio are/is directly connected with the voice communication system via a connection line, particularly without an intervening radio gateway. The VCS and the radios can communicate directly with each other due to the RRC protocol used. The connection line may be established by an Ethernet connection. Therefore, the VCS can directly command the switchover without any intervening device like a radio gateway. Furthermore, the radios can report their status directly to the VCS.

According to another aspect, the main radio and/or the standby radio are/is configured to report the respective status, particularly periodically and/or according to a pre-defined scheme. This scheme may be started once a status change has been commanded. For instance, the respective radio repeats the status reporting messages to the VCS in every packet, particularly RTP packet, until a maximum number has been reached which is defined in a status reporting repetition counter provided by the scheme applied, for instance 10, 20 or any other number set. Furthermore, the scheme may relate to a continuously reporting.

Accordingly, the voice communication system is informed about the respective status of the radios of the radio system. The status reports are forwarded to the voice communication system automatically according to the respective scheme that is inter alia initiated after each switchover.

Furthermore, the voice communication system is enabled to trigger a status report by transmitting a message associated with the remote radio control protocol, indicating the status stored (last known status) according to the last status report received from the respective radio. The radio(s) may reply to the respective request appropriately by transmitting the actual status.

In addition, the radio system may comprise a control interface via which an operator is enabled to manually switch between the main radio and the standby radio, thereby activating the respective radio switched to. The radio system enables a manual switchover between the radios of the radio system. This manual switchover is triggered by the voice communication system provided that preconditions are fulfilled, for instance a successfully synchronized voice communication system with the respective radios. This means that the requesting voice communication system is aware of the respective status of the radios involved. A precondition may also relate to the fact that the radios involved are not in a status indicating a failure, which may also be called No-Go status.

If the operator requests a manual switchover, the voice communication systems sends a message associated with the remote radio control protocol to the radios involved. The switchover may be triggered by the standby radio, namely the inactive radio, such that only the standby radio checks the respective message received. The previously main radio, namely the active radio, ignores the respective switching command received.

Afterwards, a confirmation concerning the successful switching is forwarded to the voice communication system that awaits the respective confirmation before sending any further commands. If the confirmation is not received within a defined time, the voice communication system resends the switchover command for a predefined number of retries. The predefined number of retries may be configurable.

In case the radio is receiving a switchover command from the VCS, a status request or manual switchover command via the control interface, the radio shall react accordingly and restart its status reporting repetition counter such that the respective status is reported periodically and/or according to a pre-defined scheme. As already mentioned, the respective radio repeats the status reporting messages to the VCS in every packet sent, particularly in every RTP packet, until a maximum number has been reached which is defined in the status reporting repetition counter, for instance 10, 20 or any other number set.

Another aspect provides that the voice communication system is established by a dedicated hardware device or a cloud-based server structure. The voice communication system may be a standalone device that is associated with a single air navigation service provider (ANSP).

Alternatively, the voice communication system may be implemented in a cloud-based manner such that several ANSPs may share a common voice communication system and/or radio system.

Generally, the cloud-based server structure may provide applications, also called programs, which are typically used by air traffic controllers at their controller working positions. Put differently, the respective applications run on the cloud-based server structure such that the controller working position may comprise output devices that output the respective information provided by the cloud-based server structure, particularly the applications running on the cloud-based server structure. Therefore, it is not necessary that each controller working position is equipped with expensive hardware in order to provide the necessary computational power that is required for running the applications. In addition, the same applications can be used at different locations, particularly controller working positions at different locations, by simply connecting to the cloud-based server structure via the IP infrastructure.

Generally, the cloud-based server structure concerns a data center that consists of hardware (components). The respective cloud-based server structure may relate to a central server structure or rather a distributed server structure with several distributed hardware components that are connected with each other by means of the IP infrastructure. The different hardware components distributed may be connected to the same IP network, namely the wide area network.

However, the hardware (components) of the cloud-based server structure is located at a different location compared to the respective controller working position. Particularly, the hardware (components) of the cloud-based server structure is located at a different location compared to any controller working position connected via the internet protocol infrastructure.

Since the respective applications (as well as data associated therewith) is provided by the cloud-based server structure, different entities having access to the cloud-based server structure can use them. Accordingly, the associated costs can be shared between the participating entities appropriately.

For instance, several air navigation service providers may use a common cloud-based server structure.

Moreover, the radio system may comprise several voice communication systems, wherein the radio system is configured to automatically inform these voice communication systems concerning the failure associated with the main radio. Thus, all voice communication systems of the radio system are informed appropriately that the main radio is not active anymore. This ensures that all voice communication systems that might be assigned to different air navigation service providers are up to date.

Generally, the radio system may comprise several main radios and several standby radios. Particularly, the number of main radios and the number of standby radios are different. For instance, m main radios and n standby radios are provided, wherein m does not equal n. Hence, the standby radios are not each associated to a certain main radio in an unambiguous manner such that one of the several standby radios is activated provided that one of the several main radios has a failure. In fact, one of the several, namely n, standby radios is activated in case that one of the several, namely m, main radios fails.

Alternatively, several radio pairs are provided, each comprising one main radio and one standby radio associated to the respective main radio. Thus, each main radio has a dedicated standby radio that is used in case of failure of the respective main radio.

Another aspect provides that the main radio and/or the standby radio have/has an activatable remote radio control module, enabling a remote radio control functionality to be activated or rather deactivated. Therefore, the RRC functionality of the respective radio may be activated or rather deactivated by an operator of the radio system. The functionality can be enabled/disabled via a specific configuration parameter. A reboot of the radio might be necessary to change the configuration appropriately.

Generally, it shall be possible to activate/deactivate the functionality, to set the status reporting repetition counter to the values "10", "20", "30", "continuous" and so on.

In case the RRC functionality is enabled the RRC RTP header extension are always sent, independent of other configuration parameter.

Accordingly, the respective radios are configured and connected for automatic switchover. It is ensured that only one radio at a time is main, namely active, and that the switchover is properly commanded.

As mentioned above, the radio system may comprise several voice communication systems. However, the radios shall report the current status to all connected VCSs via the respective control symbol of the RRC extension on their header.

The respective reporting is only active if the functionality is enabled.

The radios shall start reporting their status to a connected VCS under the following conditions: session start-up (to the connecting VCS), status request (to the requesting VCS), switchover commanded (to all connected VCS) and/or status change of radio (to all connected VCS).

As mentioned above, the radios repeat the status reporting messages to the respective VCS in every RTP/R2S packet, until the maximum number has been reached, as defined in the configured status reporting repetition counter.

The VCS and the radios connect with each other by session initiation protocol (SIP), namely a SIP session start-up.

When the functionality is enabled and the radios accept a SIP invitation from a respective VCS, the radios start sending their current activation status via the RRC RTP header extension to the connected VCS in every RTP/R2S packet. As already discussed, a maximum number of repetitions is provided according to the configured status reporting repetition counter.

In case the radio is receiving a radio switchover command, a status request or manual switchover command, the radios react accordingly and restart the status reporting repetition counter.

The procedure is applicable for each connected VCS via a respective SIP session.

Moreover, in case a radio with disabled RRC functionality receives from a connected VCS audio or R2S RTP packets containing RRC header extensions, the radio shall discard the additional information contained in the not relevant RTP header extension and shall continue to operate normally, according to its configuration.

In case of both radios, namely the main radio and the standby radio, sending the same activation status to the VCS, the VCS can detect the inconsistent status and shall raise an alarm.

In case a VCS, not supporting the RRC functionality, connects to a radio with the RRC function activated, the VCS receives from the radio audio or R2S RTP packets containing RRC header extensions, reporting the current activation status of the radio. The VCS shall tolerate the RRC header extension and ignore its content. However, it has to be ensured by the ANSP that the VCS, not supporting the RRC function, is timely informed by any other means about the radio switchover triggered by RRC command. Time differences between real time RRC and other protocols have to be considered in the operational environment.

The respective aspects mentioned above apply to the radio system as well as to the method of controlling a radio system appropriately.

Further aspects and advantages of the claimed subject matter will become more readily appreciated as the same become better understood by reference to the following detailed description, when taken in conjunction with the accompanying drawings, wherein:
- Figure 1 schematically shows a radio system according to the invention, and
- Figure 2 schematically shows a flow diagram illustrating different scenarios of the radio system.

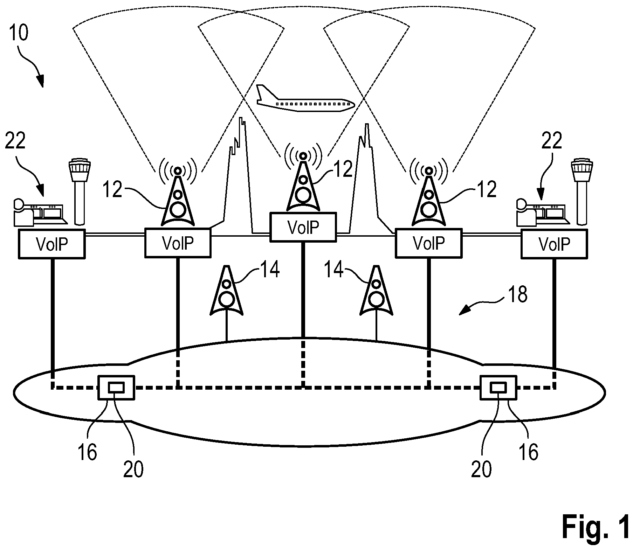

Figure 1 shows a radio system 10 for air traffic control (ATC) of a respective airspace.

In the shown embodiment, the radio system 10 comprises three main radios 12, two standby radios 14 as well as two voice communication systems 16.

The voice communication systems 16 are established by a cloud-based server structure. The respective radios 12, 14 are established by Internet Protocol based radios, namely IP-based radios.

Accordingly, the radios 12, 14 are connected with the voice communication systems 16 by means of an Internet Protocol infrastructure 18, for instance a Wide Area Network (WAN).

In a default operation mode of the radio system 10, the main radios 12 are active for establishing a radio communication with another entity, for instance an aircraft within the airspace controlled. The standby radios 14 are inactive which means that these radios 14 are not used for establishing a respective radio communication.

Furthermore, at least one of the voice communication systems 16, particularly each of the voice communication systems 16, is configured to monitor the respective status of the radios 12, 14 in order to retrieve information whether or not the respective radio 12, 14 is active or rather inactive.

Usually, the main radios 12 and the standby radios 14 are redundant which means that they are configured in a similar manner such that the standby radio 14 can be used instead of one of the main radios 12 provided that failure concerning the main radio 12 occurs.

For this purpose, the voice communication system 16 is also configured to receive a failure report in case of a failure that is associated with one of the main radios 12. The respective failure report is forwarded by means of a message associated with a remote radio control (RRC) protocol.

The voice communication system 16 is enabled to process the failure report received internally.

Furthermore, the voice communication system 16 activates a respective inactive standby radio 14 automatically while receiving the failure report associated with one of the main radios 12 such that the radio channel availability can be ensured even though one of the main radios 12 has to be deactivated due to a failure associated therewith.

In general, the failure report may be issued by one of the main radios 14 itself that forwards the failure report to the voice communication system 16. This can be ensured provided that the occurring failure is a minor one that still allows the main radio 12 to communicate with the voice communication system 16.

Alternatively or additionally, the radio system 10 comprises a monitoring module 20 that might be associated with the voice communication system 16.

The monitoring module 20 may identify a respective failure associated with one of the main radios 12 such that it forwards the failure report to the voice communication system 16. Provided that the monitoring module 20 is integrated within the voice communication system 16, the respective failure report is forwarded internally within the voice communication system 16.

In fact, the monitoring module 20 is enabled to identify a connection error, particularly a connection error associated with the IP infrastructure 18, which might cause a communication interruption between the voice communication system 16 and the respective main radio 12.

Furthermore, the monitoring module 20 may identify a total failure of the respective main radio 12 that might disable the main radio 12 to communicate its internal failure to the voice communication system 16 appropriately. For instance, the respective main failure or rather the network communication failure may be assigned to an absence of a status report of the main radio 12. The respective status report may be associated with a status report that is issued automatically due to a predefined reporting scheme.

However, the failure may also be detected provided that the voice communication system 16 requests a status report of the respective main radio 12 without receiving a response from the main radio 12.

As shown in Figure 1, the respective radios 12, 14 are directly connected with the voice communication system 16, namely the cloud-based server structure, by means of connection lines associated with the IP infrastructure 18. Hence, an intervening radio gateway is not provided that would be located between the voice communication system 16 and the respective radio 12, 14.

In addition, the radio system 10 comprises a control interface 22 that may be located at a controller working position. An operator, for instance an air traffic controller, is enabled to manually switch between a respective main radio 12 and a respective standby radio 14, thereby activating the respective radio switched to.

Thus, the air traffic controller may initiate a switchover from a respective main radio 12 to a respective standby radio 14 in a manual manner by controlling the radio system 10 appropriately. The switchover command issued via the control interface 22 is processed internally by means of the voice communication system 16 which in turn sends the respective command to the radios 12, 14.

As mentioned above, the radios 12, 14 communicate their respective status to the voice communication system 16, particularly after performing a switchover command received.

The respective voice communication system 16 are interconnected with each other such that the information with regard to the switchover performed is shared among the voice communication systems 16 appropriately such that all voice communication systems 16 may be informed about the respective status of the radios 12, 14.

Accordingly, the voice communication systems 16 are also informed about any failure associated with any of the main radios 12 since the failure reports are also shared among the voice communication systems.

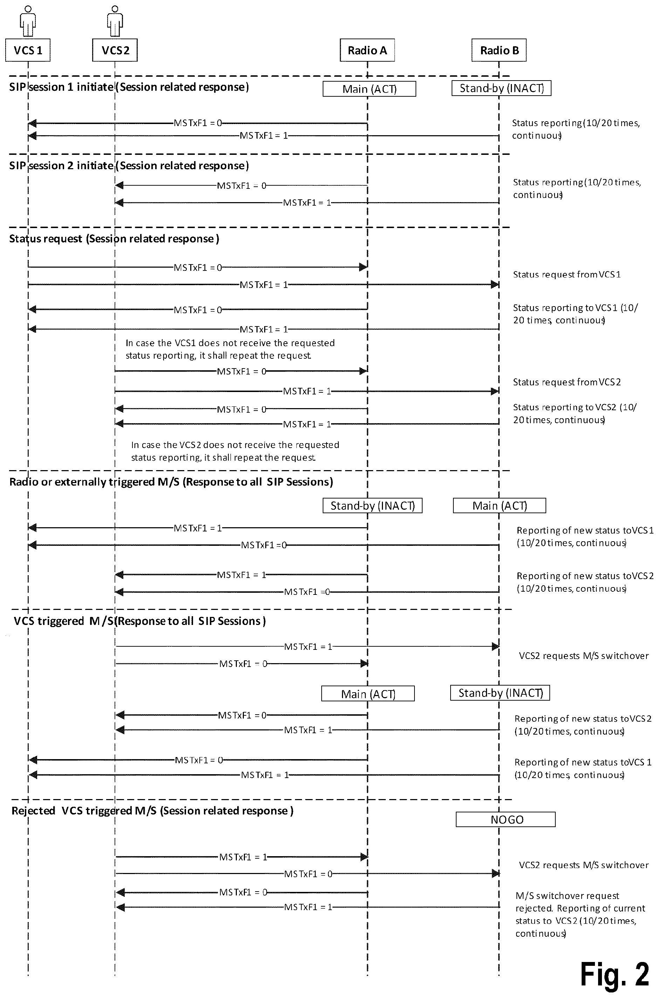

Hereinafter, different scenarios of the radio system 10 are described in more detail while referring to Figure 2.

In Figure 2, two VCSs 16 are shown that are labelled with VCS1 and VCS2. In addition, a first radio labelled with radio A and a second radio labelled with radio B are shown which might correspond to the main radio and the standby radio depending on their respective status, namely active or inactive.

At the beginning a session initiation protocol (SIP) session 1 is initiated by the first VCS 16 labelled with VCS1, wherein the respective radios 12, 14 response to the initiation by transmitting their respective status (status reporting).

In the shown embodiment, radio A is active such that it corresponds to the main radio 12, whereas radio B is inactive such that it corresponds to the standby radio 14.

Accordingly, both radios 12, 14 transmit different symbols/bits, namely "0" or rather "1", which indicate their respective status. The symbols/bits are forwarded to the first VCS 16, namely VCS1, in a real-time transport protocol (RTP) header extension.

The status reporting may be repeated according to a scheme, for instance 10 times, 20 times or continuously, wherein the corresponding symbols/bits are transmitted in each packet transmitted, particularly each RTP packet, until the maximum number (e.g. 10 or 20) has been reached.

Further, a second session initiation protocol (SIP) session 2 is initiated by the second VCS 16 labelled with VCS2, wherein the respective radios 12, 14 response to the initiation by transmitting their respective status (status reporting) in a similar manner as described above.

Furthermore, the VCSs 16 may also request the respective status of the radios 12, 14 (status request).

For this purpose, the VCSs 16 forwards the last known status of the respective radios 12, 14 towards the radios 12, 14, wherein the last known status is transmitted by means of the symbols/bits, for instance "0" or "1".

The radios 12, 14 respond to the request by a respective status reporting as described above.

Should the respective VCS 16 not receive any status reporting from one of the radios 12, 14, the status is requested again, particularly for a configurable number of repetitions. If the number of repetitions is exceeded or reached, the radio system 10 issues an alarm or an alert while assuming that the respective radio 12, 14 not responding has a major failure and/or the IP connection is disturbed.

Moreover, the radio(s) 12, 14 may trigger a switchover or rather the switchover is triggered externally, for instance manually via the control interface 22.

As shown, the first radio labelled with "A" became inactive, namely the standby radio 14, whereas the second radio labelled with "B" became active, namely the main radio 12.

The radios 12, 14 report the change of status to all active SIP sessions, namely all VCSs 16 connected by forwarding their new status by means of the respective symbols/bits.

Again, the status reporting of the radios after the externally triggered or rather manually issued switchover is done according to the respective scheme as already described above.

Furthermore, one of the VCSs 16 may also trigger the switchover automatically provided that a failure report of the main radio 12 or rather the monitoring module 20 was received.

For instance, the second VCS 16 labelled with "VCS2" commands the switchover by forwarding a respective message with the RTP header extension comprising the respective bit indicating the new status of the radios 12, 14, causing the switchover.

Hence, the main radio 12 becomes the standby radio 14 and vice versa.

Afterwards, the radios 12, 14 perform the status reporting as described above while transmitting the status to all VCSs 16 connected, namely all active SIP sessions.

The automatic switchover triggered by one of the VCS 16 may also be rejected provided that one of the radios 12, 14 has a NO-GO status associated with a failure of the respective radio 12, 14.

Accordingly, the commands forwarded from the VCS 16 to the radios are rejected by reporting their former and still actual status to the VCS 16 requesting the switchover. Put differently, the radios 12, 14 are not able to perform the switchover due to the occurring failure.

In fact, each connected VCS 16 can request the current status of the radios 12, 14 by sending to the radios 12, 14 the last known status in the RRC RTPTx header extension. The radios 12, 14 reply the current status to the requesting VCS 16 according to the setting of the status reporting repetition counter in every RTP/R2S packet. In case the VCS 16 does not receive the answer in a configurable time, it shall initiate another status request to the radios 12, 14.

However, a missing answer from one of the radios 12, 14 to a status request shall not trigger a main/standby radio switchover initiated by the VCS 16.

In case the last known radio status at the VCS 16 does not match the actual status of the radios 12, 14, a switchover is immediately triggered by the VCS 16 as described above.

As shown in Figure 2, the symbols/bits "MSTxF1", indicating the control of a transmitting radio (Tx), is used to command from the VCS 16 a radio switching (on the RTPTx header, from VCS 16 to radios 12, 14) and to report back to the current status of the radios 12, 14 (on the RTPRx header, from radios 12, 14 to VCS 16). Alternatively, the respective radio(s) 12, 14 may also correspond to receiving radios (Rx). Hence, the symbols/bits "MSRxF1" would be used appropriately.

The manual switchover may require a precondition to be fulfilled. For instance, it is required that the requesting VCS 16 is successfully synchronized with the radios 12, 14, i.e. the radio status is known and/or that the radios 12, 14 are not in the NO-GO status.

In case a manual switchover is requested, the radio system 10, particularly the respective VCS 16, sends in the RRC extension of the RTPTx Header the appropriate MSTxF1 and/or MSRxF1 values.

As the switchover is triggered by the standby radio 14, only the standby radio 14 may check the MSTxF1 and/or MSRxF1 value. The previously main radio 12 may ignore the switching command.

To prevent instable status, the VCS 16 shall wait for the confirmation from the radios 12, 14 for successful switching before sending any new command. In case the confirmation is not received within a defined time, the VCS 16 resends the switchover command for a maximum configurable number of retries.

In case the standby radio 14 detects in the RTPTx header the MSTxF1 and/or MSRxF1 = 0, it triggers an internal "SKIP_TO_GO" event, leading to a radio swichover.

Both radios 12, 14 report to the VCS 16 the new status via RRC header extension as described above. This report will be repeated from the radios 12, 14 to each connected SIP session, namely each VCS 16 connected, according to the setting of the status reporting repetition counter in every RTP/R2S packet.

Generally, the radios 12, 14 have an activatable remote radio control module, enabling the respective remote radio control functionality to be activated or rather deactivated. The respective functionality may be enabled/disabled via a specific configuration parameter such that a reboot of the respective radio 12, 14 might be necessary to change the configuration appropriately.

In case the RRC functionality is enabled the RRC RTP header extension comprising the symbol(s)/bit(s) are always sent, independent of other configuration parameters.

## Claims

1. A radio system for air traffic control, wherein the radio system comprises at least one main radio (12), at least one standby radio (14) and at least one voice communication system (16), wherein the radio system (10) has a default operation mode in which the main radio (12) is active and the standby radio (14) is inactive, and wherein the main radio (12) and the standby radio (14) are established by an internet protocol based radio, **characterized in that** the voice communication system (16) is configured to monitor the status of the main radio (12) and to monitor the status of the standby radio (14), wherein the voice communication system (16) is configured to receive a failure report in case of a failure associated with the main radio (12) by means of a remote radio control protocol, and wherein the voice communication system (16) is configured to process the failure report received and to activate the inactive standby radio (14) automatically by means of a remote radio control protocol, wherein the switching between the main radio (12) and the standby radio (14), as well as any status reporting of the respective radios (12, 14) is provided by means of messages associated with a single protocol, namely the respective remote radio control protocol, wherein the voice communication system (16) is configured to control the main radio (12) and the standby radio (14) by means of a control symbol in a real-time transport protocol header extension, and wherein the respective radio (12, 14) is configured to report its status by means of a control symbol in the real-time transport protocol header extension.

2. The radio system according to claim 1, **characterized in that** the main radio (12) itself is configured to forward the failure report to the voice communication system (16).

3. The radio system according to claim 1 or 2, **characterized in that** the radio system (10) comprises a monitoring module (20) that is configured to forward the failure report to the voice communication system (16), in particular wherein the monitoring module (20) is configured to detect a connection error of the main radio (12) and/or a total failure of the main radio (12).

4. The radio system according to any of the preceding claims, **characterized in that** the voice communication system (16) is connected with the main radio (12) and/or the standby radio (14) by means of an internet protocol infrastructure (18).

5. The radio system according to any of the preceding claims, **characterized in that** the main radio (12) and/or the standby radio (14) are/is directly connected with the voice communication system (16) via a connection line, particularly without an intervening radio gateway.

6. The radio system according to any of the preceding claims, **characterized in that** the main radio (12) and/or the standby radio (14) are/is configured to report the respective status, particularly periodically and/or according to a pre-defined scheme.

7. The radio system according to any of the preceding claims, **characterized in that** the radio system (10) comprises a control interface (22) via which an operator is enabled to manually switch between the main radio (12) and the standby radio (14), thereby activating the respective radio (12, 14) switched to.

8. The radio system according to any of the preceding claims, **characterized in that** the voice communication system (16) is established by a dedicated hardware device or a cloud-based server structure.

9. The radio system according to any of the preceding claims, **characterized in that** the radio system (10) comprises several voice communication systems (16), wherein the radio system (10) is configured to automatically inform these voice communication systems (16) concerning the failure associated with the main radio (12).

10. The radio system according to any of the preceding claims, **characterized in that** the radio system (10) comprises several main radios (12) and several standby radios (14), in particular wherein the number of main radios (12) and the number of standby radios (14) are different or wherein several radio pairs are provided, each comprising one main radio (12) and one standby radio (14) associated to the respective main radio (12).

11. The radio system according to any of the preceding claims, **characterized in that** the control symbol corresponds to a control bit.

12. The radio system according to any of the preceding claims, **characterized in that** the main radio (12) and/or the standby radio (14) have/has an activatable remote radio control module, enabling a remote radio control functionality to be activated or rather deactivated.

13. A method of controlling a radio system for air traffic control, comprising the steps of:
- Identifying a failure associated with an active main radio (12), wherein the main radio (12) is established by an internet protocol based radio,
- Issuing a failure report in case of the identified failure by means of a remote radio control protocol,
- Receiving the failure report by means of a voice communication system (16),
- Processing the failure report received by means of the voice communication system (16), and
- Activating an inactive standby radio (14) automatically by means of the voice communication system (16), wherein the standby radio (16) is established by an internet protocol based radio, wherein the switching between the main radio (12) and the standby radio (14), as well as any status reporting of the respective radios (12, 14) is provided by means of messages associated with a single protocol, namely the respective remote radio control protocol,
wherein the main radio (12) and the standby radio (14) are controlled by the voice communication system (16) by means of a control symbol in a real-time transport protocol header extension, and wherein the respective radio (12, 14) reports its status by means of a control symbol in the real-time transport protocol header extension.

14. The method according to claim 13, **characterized in that** the failure is identified by the main radio (12) itself and/or a monitoring module (20).

15. The method according to claim 13 or 14, **characterized in that** the failure report is issued by the main radio (12) itself and/or the monitoring module (20).

## Patentansprüche

1. Funksystem für eine Flugverkehrskontrolle, wobei das Funksystem mindestens ein Hauptfunkgerät (12), mindestens ein Standby-Funkgerät (14) und mindestens ein Sprachkommunikationssystem (16) umfasst, wobei das Funksystem (10) einen Standardbetriebsmodus aufweist, in dem das Hauptfunkgerät (12) aktiv ist und das Standby-Funkgerät (14) inaktiv ist, und wobei das Hauptfunkgerät (12) und das Standby-Funkgerät (14) durch ein internetprotokollbasiertes Funkgerät hergestellt werden,
**dadurch gekennzeichnet, dass** das Sprachkommunikationssystem (16) konfiguriert ist, um den Status des Hauptfunkgeräts (12) und den Status des Standby-Funkgeräts (14) zu überwachen, wobei das Sprachkommunikationssystem (16) konfiguriert ist, um im Falle eines Fehlers, der mit dem Hauptfunkgerät (12) verknüpft ist, mittels eines Funkfernsteuerungsprotokolls eine Fehlermeldung zu empfangen, und wobei das Sprachkommunikationssystem (16) konfiguriert ist, um die empfangene Fehlermeldung zu verarbeiten und um das inaktive Standby-Funkgerät (14) mittels eines Funkfernsteuerungsprotokolls automatisch zu aktivieren, wobei das Umschalten zwischen dem Hauptfunkgerät (12) und dem Standby-Funkgerät (14) sowie ein beliebiges Statusmelden der jeweiligen Funkgeräte (12, 14) mittels Nachrichten bereitgestellt wird, die mit einem einzigen Protokoll verknüpft sind, nämlich dem jeweiligen Funkfernsteuerungsprotokoll, wobei das Sprachkommunikationssystem (16) konfiguriert ist, um das Hauptfunkgerät (12) und das Standby-Funkgerät (14) mittels eines Steuersymbols in einer Echtzeittransportprotokollheadererweiterung zu steuern, und wobei das jeweilige Funkgerät (12, 14) konfiguriert ist, um seinen Status mittels eines Steuersymbols in die Echtzeittransportprotokollheadererweiterung zu melden.

2. Funksystem nach Anspruch 1, **dadurch gekennzeichnet, dass** das Hauptfunkgerät (12) selbst konfiguriert ist, um die Fehlermeldung an das Sprachkommunikationssystem (16) weiterzuleiten.

3. Funksystem nach Anspruch 1 oder 2, **dadurch gekennzeichnet, dass** das Funksystem (10) ein Überwachungsmodul (20) umfasst, das konfiguriert ist, um die Fehlermeldung an das Sprachkommunikationssystem (16) weiterzuleiten, insbesondere wobei das Überwachungsmodul (20) konfiguriert ist, um einen Verbindungsfehler des Hauptfunkgeräts (12) und/oder einen Totalausfall des Hauptfunkgeräts (12) zu erkennen.

4. Funksystem nach einem der vorstehenden Ansprüche,
**dadurch gekennzeichnet, dass** das Sprachkommunikationssystem (16) mittels einer Internetprotokollinfrastruktur (18) mit dem Hauptfunkgerät (12) und/oder dem Ersatzfunkgerät (14) verbunden ist.

5. Funksystem nach einem der vorstehenden Ansprüche,
**dadurch gekennzeichnet, dass** das Hauptfunkgerät (12) und/oder das Ersatzfunkgerät (14) über eine Verbindungsleitung, insbesondere ohne zwischengeschaltetes Funk-Gateway, mit dem Sprachkommunikationssystem (16) direkt verbunden sind.

6. Funksystem nach einem der vorstehenden Ansprüche,
**dadurch gekennzeichnet, dass** das Hauptfunkgerät (12) und/oder das Standby-Funkgerät (14) konfiguriert sind/ist, um den jeweiligen Status insbesondere periodisch und/oder nach einem vordefinierten Schema zu melden.

7. Funksystem nach einem der vorstehenden Ansprüche,
**dadurch gekennzeichnet, dass** das Funksystem (10) eine Steuerschnittstelle (22) umfasst, über die ein Bediener in der Lage ist, zwischen dem Hauptfunkgerät (12) und dem Standby-Funkgerät (14) manuell umzuschalten, wobei dadurch das jeweilige Funkgerät (12, 14) aktiviert wird, auf das umgeschaltet wird.

8. Funksystem nach einem der vorstehenden Ansprüche,
**dadurch gekennzeichnet, dass** das Sprachkommunikationssystem (16) durch eine dedizierte Hardware-Vorrichtung oder eine Cloud-basierte Server-Struktur hergestellt wird.

9. Funksystem nach einem der vorstehenden Ansprüche,
**dadurch gekennzeichnet, dass** das Funksystem (10) mehrere Sprachkommunikationssysteme (16) umfasst, wobei das Funksystem (10) konfiguriert ist, um diese Sprachkommunikationssysteme (16) bezüglich des Fehlers automatisch zu informieren, der mit dem Hauptfunkgerät (12) verknüpft ist.

10. Funksystem nach einem der vorstehenden Ansprüche,
**dadurch gekennzeichnet, dass** das Funksystem (10) mehrere Hauptfunkgeräte (12) und mehrere Standby-Funkgeräte (14) umfasst, insbesondere wobei die Anzahl der Hauptfunkgeräte (12) und die Anzahl der Standby-Funkgeräte (14) unterschiedlich sind oder wobei mehrere Funkgerätepaare bereitgestellt werden, jedes umfassend ein Hauptfunkgerät (12) und ein Standby-Funkgerät (14), das mit dem jeweiligen Hauptfunkgerät (12) verknüpft ist.

11. Funksystem nach einem der vorstehenden Ansprüche,
**dadurch gekennzeichnet, dass** das Steuersymbol einem Steuerbit entspricht.

12. Funksystem nach einem der vorstehenden Ansprüche,
**dadurch gekennzeichnet, dass** das Hauptfunkgerät (12) und/oder das Standby-Funkgerät (14) ein aktivierbares Funkfernsteuerungsmodul aufweist, was einer Funkfernsteuerungsfunktionalität ermöglicht, aktiviert oder eher deaktiviert zu werden.

13. Verfahren zum Steuern eines Funksystems für die Flugverkehrskontrolle, umfassend die Schritte:
- Identifizieren eines Fehlers, der mit einem aktiven Hauptfunkgerät (12) verknüpft ist, wobei das Hauptfunkgerät (12) durch ein internetprotokollbasiertes Funkgerät hergestellt wird,
- Ausgeben einer Fehlermeldung im Falle des identifizierten Fehlers mittels eines Funkfernsteuerungsprotokolls,
- Empfangen der Fehlermeldung mittels eines Sprachkommunikationssystems (16),
- Verarbeiten der Fehlermeldung, die mittels dem Sprachkommunikationssystem (16) empfangen wird, und
- automatisches Aktivieren eines inaktiven Standby-Funkgeräts (14) mittels des Sprachkommunikationssystems (16), wobei das Standby-Funkgerät (16) durch ein internetprotokollbasiertes Funkgerät hergestellt wird, wobei das Umschalten zwischen dem Hauptfunkgerät (12) und dem Standby-Funkgerät (14) sowie ein beliebiges Statusmelden der jeweiligen Funkgeräte (12, 14) mittels Nachrichten bereitgestellt wird, die mit einem einzigen Protokoll verknüpft sind, nämlich dem jeweiligen Funkfernsteuerungsprotokoll,
wobei das Hauptfunkgerät (12) und das Standby-Funkgerät (14) durch das Sprachkommunikationssystem (16) mittels eines Steuersymbols in einer Echtzeittransportprotokollheadererweiterung gesteuert werden, und wobei das jeweilige Funkgerät (12, 14) seinen Status mittels eines Steuersymbols in der Echtzeittransportprotokollheadererweiterung meldet.

14. Verfahren nach Anspruch 13, **dadurch gekennzeichnet, dass** der Fehler durch das Hauptfunkgerät (12) selbst und/oder ein Überwachungsmodul (20) identifiziert wird.

15. Verfahren nach Anspruch 13 oder 14, **dadurch gekennzeichnet, dass** die Fehlermeldung durch das Hauptfunkgerät (12) selbst und/oder das Überwachungsmodul (20) ausgegeben wird.

## Revendications

1. Système radio destiné au contrôle de trafic aérien, dans lequel le système radio comprend au moins une radio principale (12), au moins une radio de secours (14) et au moins un système de communication vocale (16), dans lequel le système radio (10) a un mode de fonctionnement par défaut dans lequel la radio principale (12) est active et la radio de secours (14) est inactive, et dans lequel la radio principale (12) et la radio de secours (14) sont établies par une radio basée sur le protocole Internet, **caractérisé en ce que** le système de communication vocale (16) est configuré pour surveiller le statut de la radio principale (12) et pour surveiller le statut de la radio de secours (14), dans lequel le système de communication vocale (16) est configuré pour recevoir un rapport de défaillance en cas de défaillance associée à la radio principale (12) au moyen d'un protocole de commande radio à distance, et dans lequel le système de communication vocale (16) est configuré pour traiter le rapport de défaillance reçu et pour activer la radio de secours (14) inactive, automatiquement au moyen d'un protocole de commande radio à distance, dans lequel la commutation entre la radio principale (12) et la radio de secours (14), ainsi que l'un quelconque rapport de statut des radios (12, 14) respectives sont fournis au moyen de messages associés à un unique protocole, à savoir le protocole de commande radio à distance respectif, dans lequel le système de communication vocale (16) est configuré pour commander la radio principale (12) et la radio de secours (14) au moyen d'un symbole de commande dans une extension d'en-tête de protocole de transport en temps réel, et dans lequel la radio (12, 14) respective est configurée pour rapporter son statut au moyen d'un symbole de commande dans l'extension d'en-tête de protocole de transport en temps réel.

2. Système radio selon la revendication 1, **caractérisé en ce que** la radio principale (12) elle-même est configurée pour acheminer le rapport de défaillance au système de communication vocale (16).

3. Système radio selon la revendication 1 ou 2, **caractérisé en ce que** le système radio (10) comprend un module de surveillance (20) qui est configuré pour acheminer le rapport de défaillance vers le système de communication vocale (16), en particulier dans lequel le module de surveillance (20) est configuré pour détecter une erreur de connexion de la radio principale (12) et/ou une défaillance totale de la radio principale (12).

4. Système radio selon l'une quelconque des revendications précédentes, **caractérisé en ce que** le système de communication vocale (16) est connecté à la radio principale (12) et/ou à la radio de secours (14) au moyen d'une infrastructure à protocole Internet (18).

5. Système radio selon l'une quelconque des revendications précédentes, **caractérisé en ce que** la radio principale (12) et/ou la radio de secours (14) sont/est directement connectée(s) au système de communication vocale (16) par l'intermédiaire d'une ligne de connexion, en particulier sans passerelle radio intermédiaire.

6. Système radio selon l'une quelconque des revendications précédentes, **caractérisé en ce que** la radio principale (12) et/ou la radio de secours (14) sont/est configurée(s) pour rapporter le statut respectif, en particulier périodiquement et/ou selon un schéma prédéfini.

7. Système radio selon l'une quelconque des revendications précédentes, **caractérisé en ce que** le système radio (10) comprend une interface de commande (22) par l'intermédiaire de laquelle un opérateur est habilité à commuter manuellement entre la radio principale (12) et la radio de secours (14), activant de ce fait la radio (12, 14) respective faisant l'objet de la commutation.

8. Système radio selon l'une quelconque des revendications précédentes, **caractérisé en ce que** le système de communication vocale (16) est établi par un dispositif matériel dédié ou une structure de serveur en nuage.

9. Système radio selon l'une quelconque des revendications précédentes, **caractérisé en ce que** le système radio (10) comprend plusieurs systèmes de communication vocale (16), dans lequel le système radio (10) est configuré pour informer automatiquement ces systèmes de communication vocale (16) concernant la défaillance associée à la radio principale (12).

10. Système radio selon l'une quelconque des revendications précédentes, **caractérisé en ce que** le système radio (10) comprend plusieurs radios principales (12) et plusieurs radios de secours (14), en particulier dans lequel le nombre de radios principales (12) et le nombre de radios de secours (14) sont différents ou dans lequel plusieurs paires de radios sont fournies, comprenant chacune une radio principale (12) et une radio de secours (14) associée à la radio principale (12) respective.

11. Système radio selon l'une quelconque des revendications précédentes, **caractérisé en ce que** le symbole de commande correspond à un bit de commande.

12. Système radio selon l'une quelconque des revendications précédentes, **caractérisé en ce que** la radio principale (12) et/ou la radio de secours (14) ont/a un module de commande radio à distance activable, permettant à une fonctionnalité de commande radio à distance d'être activée ou plutôt désactivée.

13. Procédé de commande d'un système radio destiné au contrôle de trafic aérien, comprenant les étapes consistant à :
- identifier une défaillance associée à une radio principale (12) active, dans lequel la radio principale (12) est établie par une radio à base de protocole Internet,
- délivrer un rapport de défaillance dans le cas de la défaillance identifiée au moyen d'un protocole de commande radio à distance,
- recevoir le rapport de défaillance au moyen d'un système de communication vocale (16),
- traiter le rapport de défaillance reçu au moyen du système de communication vocale (16), et
- activer une radio de secours (14) inactive, automatiquement au moyen du système de communication vocale (16), dans lequel la radio de secours (16) est établie par une radio à base de protocole Internet, dans lequel la commutation entre la radio principale (12) et la radio de secours (14), ainsi que l'un quelconque rapport de statut des radios (12, 14) respectives sont fournis au moyen de messages associés à un unique protocole, à savoir le protocole de commande radio à distance respectif,
dans lequel la radio principale (12) et la radio de secours (14) sont commandées par le système de communication vocale (16) au moyen d'un symbole de commande dans une extension d'en-tête de protocole de transport en temps réel, et dans lequel la radio (12, 14) respective rapporte son statut au moyen d'un symbole de commande dans l'extension d'en-tête de protocole de transport en temps réel.

14. Procédé selon la revendication 13, **caractérisé en ce que** la défaillance est identifiée par la radio principale (12) elle-même et/ou un module de surveillance (20).

15. Procédé selon la revendication 13 ou 14, **caractérisé en ce que** le rapport de défaillance est délivré par la radio principale (12) elle-même et/ou le module de surveillance (20).
